# EUROPÄISCHE PATENTSCHRIFT

(11) **EP 0 601 350 B1**
(45) Veröffentlichungstag und Bekanntmachung des Hinweises auf die Patenterteilung: **19.06.1996**
(21) Anmeldenummer: 93118253.9
(22) Anmeldetag: 11.11.1993
(51) Int. Cl.: B60R 9/04

(54) **Dachreling für Kraftfahrzeuge**
Roof rails for vehicles
Rails de toit pour véhicules

(30) Priorität: 11.12.1992 DE 4241771
(43) Veröffentlichungstag der Anmeldung: 15.06.1994
(73) Patentinhaber: Happich Fahrzeug-Dachsysteme GmbH, D-42285 Wuppertal (DE)
(72) Erfinder: Kaiser, Klaus Peter, D-42929 Wermelskirchen (DE); Lumpe, Karl-Heinz, D-42279 Wuppertal (DE)

(56) Entgegenhaltungen:
- EP-A- 0 476 288
- DE-A- 3 539 449
- US-A- 3 215 323
- US-A- 4 030 647

## Beschreibung

Die Erfindung bezieht sich auf eine Dachreling für Kraftfahrzeuge mit Stützfüßen, von diesen getragenen Galeriestäben, jeweils einer aus einem Steckzapfen und einer Aufnahmebohrung bestehenden Steckverbindung zwischen den Stützfüßen und den Galeriestäben und die Steckverbindungen jeweils sichernde Mittel. Eine solche Dachreling ist z.B. aus DE-A-3 539 449 bekannt.

Die Verbindung zwischen den Stützfüßen und den Galeriestäben erfolgt in der Regel durch eine Steckverbindung, wobei ein am Stützfuß oder Galeriestab überstehend angeordneter Steckzapfen in eine Stecköffnung, die am jeweils anderen Teil ausgebildet ist, eingeführt wird. Zur axialen Sicherung einer solchen Steckverbindung werden Schrauben, Nieten, Stifte und dergleichen eingesetzt. Es ist auch bekannt, die Steckverbindungen durch Kleben zu sichern, was aber problematisch ist, weil sich nicht immer ein Herausquellen des Klebers vermeiden läßt, was aber beträchtliche Nacharbeiten erforderlichen machen kann. Die bekannten Steckverbindungen und die diese jeweils sichernden Mittel haben miteinander gemeinsam, daß sie aufwendig, zeitraubend, kostspielig und daher unwirtschaftlich sind und nicht immer den gewollten technischen Erfolg sichern.

Es ist daher die Aufgabe der vorliegenden Erfindung, eine Dachreling der eingangs genannten Art zu schaffen, die bei vergleichsweise einfacher und kostengünstiger Herstellbarkeit schnell und leicht zu montieren ist und die sich im Bereich der Steckverbindungen durch eine zuverlässige Abzugssicherheit auszeichnen soll.

Diese Aufgabe wird erfindungsgemäß dadurch gelöst, daß jeder Steckzapfen zumindest ein konvex geformtes Stirnende und eine zentrisch daran befestigte Scheibe als die Steckverbindung sicherndes Mittel aufweist, daß die Scheibe, die in der Ausgangslage einen gegenüber dem Steckzapfen größeren Durchmesser besitzt, sich beim Einstecken des Steckzapfens in die Aufnahmebohrung deren Durchmesser und der konvexen Form des Steckzapfenstirnendes anzupassen vermag und daß die Scheibe mit mehreren radialen, nach außen frei auslaufenden Schlitzen ausgebildet ist.

Durch die erfindungsgemäßen Maßnahmen wird erreicht, daß der Steckzapfen leicht und problemlos, insbesondere auch ohne Zuhilfenahme von Montagewerkzeugen in die Aufnahmebohrung eingeführt jedoch nicht wieder, es sei denn durch Zerstörung, herausgezogen werden kann. Die Steckverbindung ist in axialer Richtung äußerst zuverlässig gesichert, was durch die mit Schlitzen versehene Scheibe gewährleistet ist, die sich beim Einschieben in die Aufnahmebohrung entgegen der Einsteckrichtung wölbt, ggf. bis hin zur Anlage am konvex geformten Stirnende des Steckzapfens. Da der Durchmesser der Scheibe in der Ausgangslage größer ist als der Bohrungsdurchmesser der Aufnahme, liegen die durch die Radialschlitze gebildeten Lamellen mit ihren äußeren Randkanten unter Vorspannung an der Bohrungswandung an und sperren sich gegen eine Rückzugsbewegung.

Eine besonders vorteilhafte Weiterbildung der Erfindung sieht vor, daß die am Steckzapfen gefestigte Scheibe mit einem gegenüber dessen Stirnende größeren Radius vorgewölbt ist. Diese Maßnahme vereinfacht noch die Montage (erleichtertes Einstecken) und wirkt gleichzeitig toleranzausgleichend.

In Ausgestaltung der Erfindung kann vorgesehen sein, daß der Steckzapfen aus einem Rundstahlabschnitt besteht, an beiden Stirnenden konvex geformt und mit jeweils daran befestigten Scheiben versehen ist und mit den Endbereichen in Aufnahmebohrungen einsteckbar ist, die jeweils in den Stützfüßen und in den Galeriestäben ausgebildet sind. Es ist ersichtlich, daß sich durch diese Maßnahme eine besonders vereinfachte Montage ergibt.

Eine alternative Ausführungsform der Erfindung sieht vor, daß der Steckzapfen an einem Endbereich einen durch Umspritzen unmittelbar angeformten Kunststoffkörper trägt, der einen dem Öffnungsquerschnitt der Galeriestäbe entsprechenden Querschnitt aufweist und mit Presspassung in ein Galeriestabende einsteckbar ist. Diese Maßnahme ist immer dann sinnvoll, wenn rohrförmige Galeriestäbe mit komplizierten, z. B. rhombischem Querschnitt für eine Dachreling zum Einsatz kommen bzw. wenn aus Gewichts- und Materialersparnisgründen ein großer Öffnungsquerschnitt bei den Galeriestäben gewünscht wird.

Ausführungsbeispiele der Erfindung werden nachfolgend anhand der Zeichnung näher erläutert. Es zeigen:
- Fig. 1: eine Dachreling mit Stützfüßen und Galeriestäben,
- Fig. 2: einen Verbindungsbereich zwischen einem Stützfuß und einem Galeriestab gemäß einer ersten Ausführungsform,
- Fig. 3: einen Verbindungsbereich zwischen einem Stützfuß und einem Galeriestab gemäß einer zweiten Ausführungsform,
- Fig. 4: einen Steckzapfen in vergrößertem Maßstab und
- Fig. 5: eine Ansicht in Pfeilrichtung V nach Fig. 4.

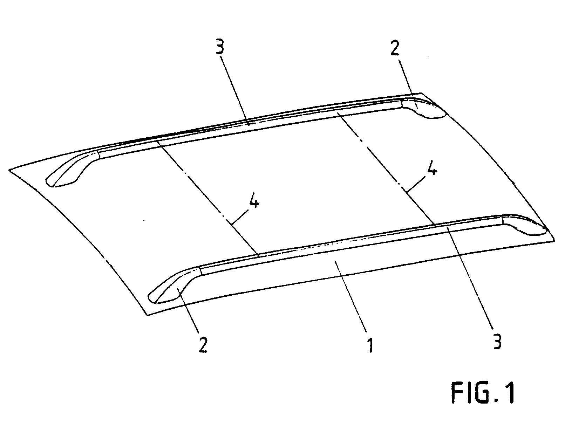

Fig. 1 läßt das Dachblech 1 eines Fahrzeugs mit einem darauf angeordneten Dachlastenträger erkennen. Der Dachlastenträger wird aus zwei Dachrelings, bestehend aus Stützfüßen 2 und Galeriestäben 3 sowie aus lediglich strichpunktiert angedeuteten Querträgern 4, die an den Galeriestäben 3 befestigt sind, gebildet. Die Dachrelings erstrecken sich zumindest annähernd parallel zueinander und verlaufen in Fahrtrichtung des Fahrzeugs.

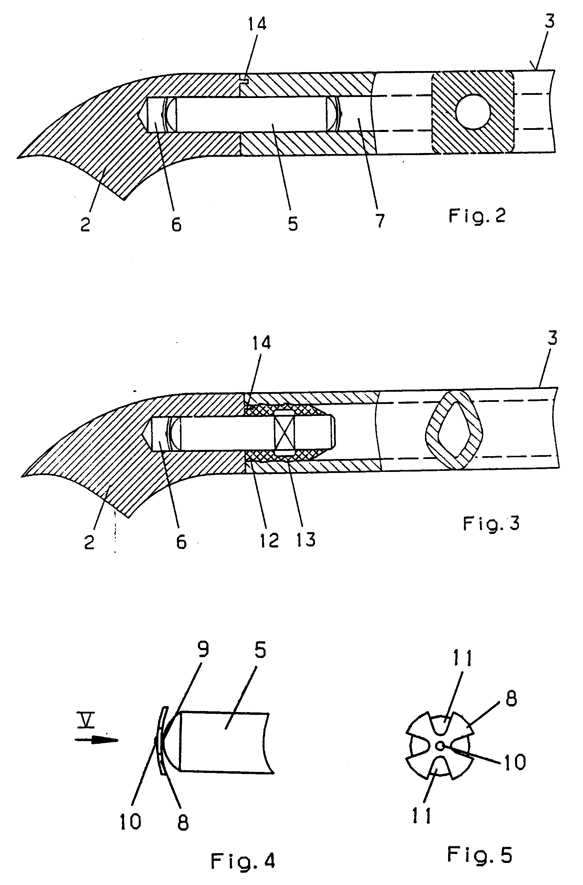

Die neue Verbindung zwischen einem Galeriestab 3 und einem Stützfuß 2 ist aus Fig. 2 und 3 ersichtlich. Dabei zeigt Fig. 2 einen Stützfuß 2 mit einem daran angesetzten Galeriestab 3 und einem Stegstapfen 5 als Verbindungsmittel. Der Stegzapfen 5, der zylindrisch ausgebildet ist und aus Stahl besteht, greift mit einem Endbereich in eine Aufnahmebohrung 6 im Stützfuß 2 und mit seinem anderen Endbereich in eine Aufnahmebohrung 7 im Galeriestab 3 jeweils passend ein. Als Verdrehsicherung für den unrund ausgebildeten Galeriestab 3 dient ein am Stützfuß 2 angeordneter Zapfen 14, der in eine stirnseitige Aufnahmeöffnung des Galeriestabs 3 eingreift. Die Montage ist denkbar einfach und erschöpft sich darin, den Steckzapfen 5 in die Aufnahmebohrungen 6 und 7 einzustecken und den Galeriestab 3 gegen den Stützfuß 2 bis auf Stoß zu bewegen.

Als die Steckverbindung jeweils axial sicherndes Mittel dient eine runde, aus Stahlblech bestehende Scheibe 8, die jeweils an den Stirnenden des Steckzapfens 5 (vgl. Fig. 2) oder an einem Steckzapfenende (vgl. Fig. 3) befestigt ist. Die Befestigung kann z.B. dadurch erfolgen, daß die gelochte Scheibe 8 über eine zentrische Zapfenverlängerung 9 des Steckzapfens 5 geschoben und aus der Zapfenverlängerung 9 hiernach ein Nietkopf 10 gebildet wird, der die Scheibe 8 am Steckzapfen 5 hält.

Der Steckzapfen 5 ist an zumindest einem Stirnende konvex geformt, was besonders deutlich aus der vergrößerten Darstellung nach Fig. 4 ersichtlich ist. Der tatsächliche Durchmesser des Steckzapfens 5 liegt bei etwa 8 bis 14 mm. Die am konvex geformten Stirnende des Steckzapfens 5 befestigte Scheibe 8 ist entsprechend vorgeformt jedoch mit einem größeren Radius, so daß sie beim Einstecken in die Aufnahmebohrung 6 oder 7 bis auf Anlage am Stirnende des Steckzapfens 5 zurückfedern kann. Dies ist erforderlich, weil die Scheibe 8 in der Ausgangslage, die in Fig. 4 und 5 dargestellt ist, einen größeren Druchmesser als der Steckzapfen 5 oder die Aufnahmebohrungen 6 und 7 besitzt. Das Zurückfedern der Scheibe 8 wird aber insbesondere dadurch begünstigt, daß dieselbe mit mehreren radialen randoffenen Schlitzen 11 ausgebildet ist. Es ist ohne weiteres einzusehen, daß das Einstecken des Steckzapfens 5 in eine Stecköffnung 6 oder 7 durch die Scheibe 8 nicht behindert wird, während die Scheibe 8 andererseits ein Herausziehen des Steckzapfens 5 aus einer Stecköffnung 6 oder 7 unmöglich macht.

Beim Ausführungsbeispiel nach Fig. 3 sind für miteinander vergleichbare Teile die auch für die anderen Darstellungen verwendeten Bezugszeichen vorgesehen. Der Unterschied des Ausführungsbeispiels nach Fig. 3 gegenüber dem nach Fig. 2 besteht darin, daß der Steckzapfen 5 nur einendig eine Scheibe 8 trägt, während der andere Endbereich mit einem Kunststoffkörper 12 versehen ist, der zweckmäßigerweise durch Umspritzen unmittelbar auf den Steckzapfen 5 aufgebracht ist. Der Kunststoffkörper 12 besitzt einen Querschnitt, der der jeweiligen Querschnittsöffnung des Galeriestabs, im Ausführungsbeispiel nach Fig. 3 rhombisch, angepaßt ist. Der Kunststoffkörper 12 wird bei der Montage in ein Galeriestabende eingepreßt und im Galeriestabendbereich kraftschlüssig gehalten. Zwecks Erhöhung der Preßpassung können am Kunststoffkörper 12 widerhakenförmige Vorsprünge 13 angeformt sein. Das andere Ende des Steckzapfens 5 trägt eine Scheibe 8 und greift in die Aufnahmebohrung 6 analog dem vorbeschriebenen Ausführungsbeispiel ein.

## Patentansprüche

1. Dachreling für Kraftfahrzeuge mit Stützfüßen (2), von diesen getragenen Galeriestäben (3), jeweils einer aus einem Steckzapfen (5) und einer Aufnahmebohrung (6, 7) bestehenden Steckverbindung zwischen den Stützfüßen (2) und den Galeriestäben (3) und die Steckverbindungen jeweils sichernde Mittel, dadurch gekennzeichnet, daß jeder Steckzapfen (5) zumindest ein konvex geformtes Stirnende und eine zentrisch daran befestigte Scheibe (8) als die Steckverbindung sicherndes Mittel aufweist, daß die Scheibe (8), die in der Ausgangslage einen gegenüber dem Steckzapfen (5) größeren Durchmesser besitzt, sich beim Einstecken des Steckzapfens (5) in die Aufnahmebohrung (6, 7) deren Durchmesser und der konvexen Form des Steckzapfenstirnendes anzupassen vermag und daß die Scheibe (8) mit mehreren radialen, nach außen frei auslaufenden Schlitzen (11) ausgebildet ist.

2. Dachreling nach Anspruch 1, dadurch gekennzeichnet, daß die am Steckzapfen (5) befestigte Scheibe (8) mit einem gegenüber dessen Stirnende größeren Radius vorgewölbt ist.

3. Dachreling nach Anspruch 1 oder 2, dadurch gekennzeichnet, daß der Steckzapfen (5) aus einem Rundstahlabschnitt besteht, an beiden Stirnenden konvex geformt und mit jeweils daran befestigten Scheiben (8) versehen ist und mit den Endbereichen in Aufnahmebohrungen (6, 7) einsteckbar ist, die jeweils in den Stützfüßen (2) und in den Galeriestäben (3) ausgebildet sind.

4. Dachreling nach Anspruch 1 oder 2, dadurch gekennzeichnet, daß der Steckzapfen (5) an einem Endbereich einen durch Umspritzen unmittelbar angeformten Kunststoffkörper (12) trägt, der einen dem Öffnungsquerschnitt der Galeriestäbe (3) entsprechenden Querschnitt aufweist und mit Preßpassung in ein Galeriestabende einsteckbar ist.

## Claims

1. Roof rail for motor vehicles, having supporting feet (2), raised bars (3) supported by the latter, a plug-in connection, consisting of a plug-in pin (5) and a receiving hole (6, 7), in each case between the supporting feet (2) and the raised bars (3), and means in each case securing the plug-in connections, characterized in that each plug-in pin (5) has at least one convexly shaped end and a washer (8), attached centrally thereto, as means securing the plug-in connection, in that the washer (8), which initially has a larger diameter than the plug-in pin (5), is able, on insertion of the plug-in pin (5) into the receiving hole (6, 7), to adapt to the diameter thereof and to the convex shape of the plug-in pin end, and in that the washer (8) is designed with a plurality of radial slots (11) running freely outwards.

2. Roof rail according to Claim 1, characterized in that the washer (8), which is attached to the plug-in pin (5), is precurved with a larger radius than the end of said pin.

3. Roof rail according to Claim 1 or 2, characterized in that the plug-in pin (5) consists of a portion of round steel, is convexly shaped at both ends and is provided with washers (8) respectively attached thereto, and can be inserted by the end regions into receiving holes (6, 7) respectively formed in the supporting feet (2) and in the raised bars (3).

4. Roof rail according to Claim 1 or 2, characterized in that the plug-in pin (5) bears, at an end region, a plastic body (12) which is moulded directly onto it by means of encapsulation by injection moulding, has a cross-section corresponding to the opening cross-section of the raised bars (3) and can be inserted with a press fit into an end of a raised bar.

## Revendications

1. Galerie de toit pour véhicule automobile avec pieds a'appui (2), des barres de galerie (3) portées par ceux-ci, un assemblage à emboîtement, constitué d'un tenon à emboîter (5) et d'un perçage de logement (6, 7), entre les pieds d'appui (2) et les barres de galerie (3) et des moyens bloquant les assemblages à emboîtement, caractérisée en ce que chaque tenon à emboîter (5) présente au moins une extrémité frontale convexe et une rondelle (8) fixée au centre sur celle-ci en tant que moyen bloquant l'assemblage à emboîtement, en ce que la rondelle (8), qui dans la position initiale présente un plus grand diamètre que le tenon à emboîter (5), peut s'adapter, lors de l'emboîtement du tenon à emboîter (5), dans le perçage de logement (6, 7) à son diamètre et à la forme convexe de l'extrémité frontale du tenon à emboîter et en ce qui la rondelle (8) présente plusieurs fentes (11) radiales, débouchant librement vers l'extérieur.

2. Galerie de toit selon la revendication 1, caractérisée en ce que la rondelle (8), fixée sur le tenon à emboîter (5), est précintrée avec un rayon plus grand que son extrémité frontale.

3. Galerie de toit selon la revendication 1 ou 2, caractérisée en ce que le tenon à emboîter (5) est constitué d'une portion en acier rond, est convexe aux deux extrémités frontales et est pourvu de rondelles fixées à chacune d'elles et peur être emboîté avec les zones d'extrémité dans des perçages de logement (6, 7), qui sont formés chacun dans les pieds d'appui (2) et dans les barres de galerie (3).

4. Galerie de toit selon la revendication 1 ou 2, caractérisée en ce que le tenon à emboîter (5) porte, à une zone d'extrémité, un corps en matière plastique (12) formé directement par enrobage, qui présente une section transversale correspondant à la section transversale d'ouverture des barres de galerie (3) et qui peut être emboîté avec ajustement pressé dans une extrémité de barre de galerie.
